# FASCICULE DE BREVET EUROPEEN

(11) **EP 2 598 357 B1**
(45) Date de publication et mention de la délivrance du brevet: **07.09.2016**
(21) Numéro de dépôt: 11736412.5
(22) Date de dépôt: 29.07.2011
(51) Int. Cl.: B60J 7/05, B60J 1/14, B60J 1/16, B60J 7/02

(54) **DISPOSITIF D'OBTURATION D'UNE BAIE MENAGEE DANS LE TOIT D'UN VEHICULE AUTOMOBILE, APTE A ETRE PLACE DANS UNE POSITION D'OBTURATION PARTIELLE**
DACHINTEGRIERTE VERRIEGELUNGS- UND ÖFFNUNGSVORRICHTUNG EINES KRAFTFAHRZEUGES MIT HALBOFFENER VERRIEGELUNGSPOSITION
DEVICE FOR CLOSING OFF AN OPENING PROVIDED IN THE ROOF OF A MOTOR VEHICLE AND WHICH IS CAPABLE OF BEING PLACED IN A PARTIALLY CLOSED OFF POSITION

(30) Priorité: 03.03.2011 FR 1151726; 30.07.2010 FR 1056344
(43) Date de publication de la demande: 05.06.2013
(73) Titulaire: Advanced Comfort Systems France SAS - ACS France, 79302 Bressuire Cedex (FR)
(72) Inventeur: COUSSON, François, F-79430 La Chapelle Saint-laurent (FR); MARTINEAU, Daniel, F-85700 Saint-mesmin (FR)
(74) Mandataire: Vidon Brevets & Stratégie
(86) Numéro de dépôt international: PCT/EP2011/063168
(87) Numéro de publication internationale: WO 2012/013815

(56) Documents cités:
- EP-A2- 1 974 968
- WO-A1-01/94141
- WO-A1-2004/089672
- DE-A1- 3 205 445
- FR-A1- 2 483 338

## Description

### 1. Domaine de l'invention

L'invention s'inscrit dans le domaine des baies vitrées pour véhicules automobiles, qu'il s'agisse de baies latérales ou de baies destinées à former des pavillons de véhicules. Plus précisément, l'invention concerne les baies vitrées comprenant au moins une ouverture coopérant avec un panneau vitré mobile coulissant.

Dans le cadre de la présente demande, on entend par le terme « panneau vitré » tout panneau (fixe ou mobile) substantiellement transparent ou translucide participant au clair de baie, réalisé en verre ou en tout matériau adapté, tel que le polycarbonate. Les bords du panneau peuvent être opacifiés, par exemple par sérigraphie. Dans certains modes de réalisation, le panneau peut être constitué de plusieurs éléments affleurants, vus de l'extérieur, et, le cas échéant, au moins un des ces éléments peut être opaque, et par exemple en métal.

Un dispositif selon l'invention peut en outre équiper une baie formée dans une partie sensiblement horizontale de la carrosserie du véhicule, autre que le pavillon.

### 2. Techniques de l'art antérieur

La tendance actuelle, en matière de véhicule automobile, qu'il s'agisse d'une automobile, d'un véhicule utilitaire, d'un camion, ou d'un autobus, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil. Des solutions ont été proposées pour dégager des ouvertures dans le pavillon, notamment pour pouvoir former un module de toit ouvrant.

Ainsi, une technique répandue pour libérer une ouverture dans le pavillon consiste à faire basculer une vitre mobile montée sur un cadre vers l'extérieur du
véhicule autour d'un axe solidaire du plan du pavillon, pour libérer un passage entre la vitre et le cadre.

Une autre technique de toit ouvrant également utilisée de façon classique consiste à rendre la vitre mobile au-dessus ou au-dessous du pavillon dans un plan sensiblement parallèle au plan du pavillon. On connaît ainsi une première technique de pavillon percé d'une baie pouvant être obturée par un panneau vitré coulissant logé dans la garniture du pavillon. Un exemple de pavillon de ce type est décrit dans le document WO01/94141 (figure 3).

Une autre technique de toit ouvrant également répandue consiste en une combinaison des précédentes, qui permet ainsi alternativement d'entrebâiller le panneau mobile ou de libérer totalement l'ouverture par escamotage du panneau mobile.

Un inconvénient de cette technique est que, dans l'état actuel des choses, les moyens permettant l'entrebâillement du panneau mobile par rapport à la partie fixe sont montés sur ladite partie fixe et présentent donc un encombrement important.

Par ailleurs, dans les dispositifs connus, le panneau mobile et son cadre sont solidaires l'un de l'autre, de sorte qu'il n'est pas possible de prévoir de moyens d'étanchéité permettant de protéger la partie fixe de projections d'eau pouvant provenir de l'extérieur lorsque le panneau mobile est entrebâillé, puisque seuls peuvent être employés dans un tel cas des moyens d'étanchéité entre le panneau mobile et la partie fixe qui sont inopérants lorsque le panneau mobile est entrebâillé.

Pour remédier à ce problème, on a proposé d'équiper le contour de la partie fixe d'un bac périphérique de récupération d'eau dans lequel est recueillie l'eau s'étant déposée sur la surface de la vitre mobile.

Un inconvénient de cette solution est que le bac peut se remplir complètement, et, dans certains cas, déborder. Le trop-plein d'eau peut se déverser alors dans l'habitacle au travers de l'ouverture, ce qui n'est bien sûr pas satisfaisant.

Un autre inconvénient de cette solution est la nécessité de la présence d'un bac de récupération d'eau qui réduit le clair de baie et/ou la taille admissible de l'ouverture sur l'extérieur, et/ou le volume de l'habitacle.

Encore un inconvénient de cette solution est que les éléments prévus pour la récupération d'eau peuvent nuire à l'esthétique du véhicule.

Encore un autre inconvénient encore de cette solution est que, dans certains cas, de l'eau peut stagner et croupir dans le bac de récupération en émettant une odeur désagréable.

### 3. Objectifs de l'invention

L'invention a notamment pour objectif de pallier les différents inconvénients de ces techniques connues.

Plus précisément, un objectif de l'invention est, au moins dans un mode de réalisation particulier, de fournir une technique d'obturation d'une baie horizontale ménagée dans la carrosserie d'un véhicule, et dotée d'une ouverture pouvant être libérée par un panneau vitré mobile, dans lequel les moyens permettant l'entrebâillement du panneau mobile par rapport à la partie fixe sont présentent un encombrement réduit par rapport aux moyens mis en oevre dans les dispositifs connus.

Un autre objectif atteint grâce à une variante de l'invention est de rendre superflue la mise en oeuvre d'un bac de récupération d'eau autour de l'ouverture aménagée dans la partie fixe.

### 4. Exposé de l'invention

Ces objectifs, ainsi que d'autres qui apparaîtront plus clairement par la suite, sont atteints selon l'invention à l'aide d'un dispositif d'obturation d'une baie ménagée dans la carrosserie d'un véhicule automobile, comprenant :
une partie fixe vitrée destinée à être solidarisée audit véhicule, et
un panneau vitré mobile apte à se déplacer par rapport à la partie fixe entre une position d'obturation, dans laquelle il obture une ouverture pratiquée dans ladite partie fixe, et au moins une position d'ouverture, dans laquelle ladite ouverture est au moins partiellement libérée,
dispositif caractérisé en ce que le panneau mobile est monté sur un cadre mobile qui est muni de moyens de basculement pour faire basculer le panneau mobile par rapport audit cadre mobile, incluant au moins une biellette reliant le panneau mobile au cadre mobile et apte à coopérer avec un coulisseau monté glissant par rapport au cadre mobile.

Selon l'invention, l'entrebâillement du panneau mobile est obtenu en faisant basculer le panneau mobile par rapport à son cadre, alors que dans l'état de la technique, c'est l'ensemble constitué par le panneau mobile et son cadre qui bascule par rapport à la partie fixe, un tel ensemble présentant un encombrement et un poids plus importants que le seul panneau mobile.

Ainsi, l'invention permet de recourir à des moyens de basculement moins puissants et donc moins encombrants que ceux mis en oeuvre dans l'état actuel de la technique.

Selon un mode de réalisation particulièrement avantageux de l'invention, le coulisseau est apte à être entraîné en translation par des moyens de mise en mouvement du cadre mobile par rapport à la partie fixe.

Un tel mode de réalisation permet de commander les moyens de basculement avec des moyens préexistants auxquels une nouvelle fonctionnalité est ainsi conférée.

Selon un mode de réalisation particulier, les moyens de mise en mouvement du cadre incluent au moins un bras monté glissant par rapport à la partie fixe et relié au coulisseau inclus dans les moyens de basculement, qui incluent en outre des moyens de maintien en position de la biellette destinés à n'être désactivés que lorsque le cadre mobile est en position d'obturation.

Un tel mode de mise en oeuvre permet de provoquer de façon très naturelle l'entrebâillement du panneau mobile en allongeant simplement la course du ou des bras qui entraînent en mouvement le cadre mobile.

Selon une variante de l'invention, le cadre est muni de moyens d'étanchéité destinés à être placés en contact avec une périphérie de l'ouverture définie dans ladite partie fixe.

De tels moyens d'étanchéité permettent de protéger la partie fixe contre d'éventuelles projections d'eau qui viendraient à se produire lorsque le panneau mobile est entrebâillé.

Selon un mode de réalisation particulièrement avantageux de cette variante, le cadre mobile est muni de moyens de récupération et d'évacuation d'eau, lesdits moyens de récupération et d'évacuation d'eau comprenant au moins un passage d'eau solidaire du cadre mobile, pour permettre le passage de ladite eau depuis le cadre mobile vers l'extérieur du véhicule.

Un tel mode de réalisation permet une évacuation régulière et naturelle d'eau ruisselant sur le panneau mobile, et est réalisé grâce à des moyens peu encombrants qui s'intègrent aisément dans la structure même du cadre mobile.

En particulier, dans un mode de mise en oeuvre où le cadre mobile est muni de pions de guidage en coulissement le long de deux rails solidarisés à la surface de ladite partie fixe, les moyens de récupération et d'évacuation d'eau comprennent au moins un passage formé de part en part dans un des pions de guidage.

Selon un aspect particulier de l'invention, lesdits moyens de récupération et d'évacuation d'eau comprennent au moins un élément de goulotte formé et/ou solidaire du cadre dudit panneau mobile.

Un tel élément de goulotte, pouvant par exemple présenter une forme de gouttière dans au moins un mode de réalisation particulier de l'invention, permet de recueillir l'eau sur tout ou partie du contour du panneau vitré mobile.

Dans au moins un mode de réalisation particulièrement avantageux de l'invention, ledit élément de goulotte empiète au moins partiellement sur l'habitacle dudit véhicule en vis-à-vis de ladite partie fixe.

Ainsi, l'eau ruisselant de la partie fixe au travers de l'ouverture tombe dans l'élément de goulotte, qui va permettre de l'évacuer. L'élément de goulotte assure donc une fonction supplémentaire de « barrière » d'étanchéité, protégeant l'habitacle. En outre, en position d'obturation, si l'étanchéité obtenue n'est pas parfaite en raison par exemple, de migrations d'eau par capillarité, les gouttes d'eau suintantes peuvent être recueillies dans l'élément de goulotte afin d'être évacuées.

Selon une variante de ce mode de mise en oeuvre, l'élément de goulotte inclut une gouttière adjacente aux moyens d'étanchéité et raccordée à au moins un passage d'eau aménagé au travers dudit panneau mobile.

Une telle gouttière permettra de récupérer de l'eau qui serait projetée pardessus les moyens d'étanchéité et renforce encore la protection contre des éclaboussures intempestives.

Les moyens d'étanchéité peuvent par exemple être des cordons ou des joints d'étanchéité, ou tout autre élément déformable adapté, rendant l'ouverture étanche en position d'obturation quelles que soient les conditions climatiques et/ou d'utilisation (pluie fine, pluie abondante, lavage au moyen d'un jet sous pression, ...).

Ils peuvent également être constitués, dans certains modes de réalisation particuliers de l'invention, d'un clapet ou de tout autre élément articulé approprié, dont l'état peut être contrôlé, par exemple, par des moyens de déverrouillage du panneau mobile.

De façon préférentielle, ledit panneau mobile présente un galbe dans au moins deux directions horizontales, de sorte à faire ruisseler ladite eau vers au moins un de ses bords.

Ainsi, l'eau ne s'accumule pas sur la surface du panneau vitré mobile, ce qui évite les projections dans l'habitacle en cas de secousse et améliore la visibilité au travers du panneau mobile.

L'invention concerne également un véhicule automobile équipé d'un des dispositifs d'obturation tels que décrits ci-dessus.

### 5. Liste des figures

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- la figure 1 illustre, dans une vue en perspective de dessus, un mode de réalisation d'un dispositif d'obturation selon l'invention formant un pavillon d'un véhicule, dans une position d'ouverture partielle ;
- les figures 2A à 2E sont des représentations en section d'un dispositif d'obturation selon l'invention dans différentes configurations possibles ;
- la figure 3 est une vue de dessus partielle, au niveau d'un pion de guidage, d'un cadre mobile inclus dans un dispositif d'obturation selon l'invention ;
- la figure 4 est une vue en perspective partielle d'un véhicule incluant un dispositif d'obturation selon l'invention;
- les figures 5A à 5C sont des vues en perspective de moyens de basculement conformes à un mode de mise en oeuvre particulier de l'invention, dans trois positions successives ;
- les figures 6 et 7 illustrent deux modes de liaison possibles entre les moyens de basculement et des moyens de mis en mouvement du cadre mobile ;
- la figure 8 est une vue en perspective d'un autre dispositif d'obturation conforme à l'invention, mis en oeuvre au sein d'une baie vitrée latérale ;
- la figure 9 représente un tel dispositif d'obturation en position ouverte;
- les figures 10 à 13 représentent un tel dispositif dont le cadre mobile est en position d'obturation, le panneau mobile y étant représenté en diverses position de basculement possibles.

### 6. Description détaillée d'un mode de réalisation de l'invention

### 6.1. Rappel du principe de l'invention

Comme précédemment évoqué, le principe général de l'invention réside dans le fait que le panneau mobile est apte à basculer par rapport au cadre mobile, ce qui permet de mettre en oeuvre à cet effet des moyens de basculement qui présentent un encombrement réduit vis-à-vis de ceux qui sont mis en oeuvre dans l'état de la technique pour faire basculer un ensemble mobile incluant à la fois le cadre et le panneau mobiles.

Dans au moins un mode de réalisation de l'invention, des moyens d'étanchéité destinés à être placés en contact avec une périphérie de l'ouverture définie dans ladite partie fixe permettent en outre de protéger la partie fixe contre d'éventuelles projections d'eau qui viendraient à se produire lorsque le panneau mobile est entrebâillé.

### 6.2. Exemples de mode de réalisation de l'invention

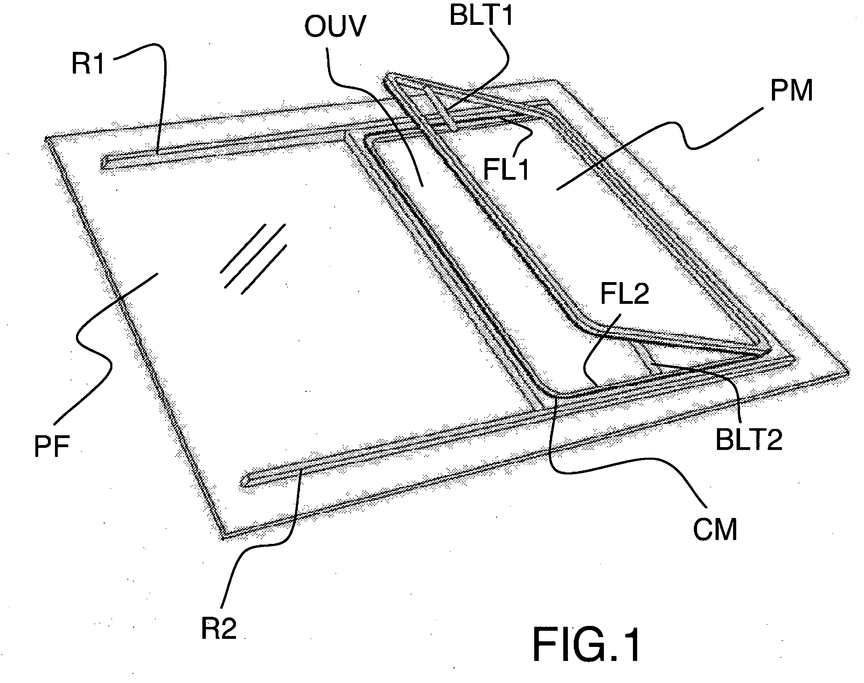

La **FIG.1** représente un dispositif d'obturation d'une baie ménagée dans la carrosserie d'un véhicule automobile, comprenant :
une partie fixe PF vitrée destinée à être solidarisée audit véhicule, et
un panneau vitré mobile PM apte à se déplacer par rapport à la partie fixe PF entre une position d'obturation, dans laquelle il obture une ouverture OUV pratiquée dans ladite partie fixe, et au moins une position d'ouverture, dans laquelle ladite ouverture est au moins partiellement libérée.

De façon connue, en vue de libérer l'ouverture OUV, le cadre mobile CM est apte à être déplacé vers l'arrière du véhicule par coulissement dans des rails R1 et R2 solidaires de la partie fixe PF et situés de part et d'autre dudit cadre mobile CM, qui sont ici visibles en transparence au travers de la partie fixe PF.

Le dispositif selon l'invention est remarquable en ce que le panneau mobile PM est monté sur un cadre mobile CM qui est muni de moyens de basculement pour faire basculer le panneau mobile PM par rapport audit cadre mobile CM. Ces moyens de basculement incluent ici une première et une deuxième biellette BLT1 et BLT2, respectivement reliées à des première et deuxième faces latérales internes FL1 et FL2 du cadre mobile CM par des liaisons pivot.

Selon l'invention, l'entrebâillement du panneau mobile PM est obtenu en faisant basculer le panneau mobile PM par rapport à son cadre CM, alors que dans l'état de la technique, c'est l'ensemble constitué par le panneau mobile PM et son cadre CM qui bascule par rapport à la partie fixe PF, un tel ensemble présentant un encombrement et un poids plus importants que le seul panneau mobile PM.

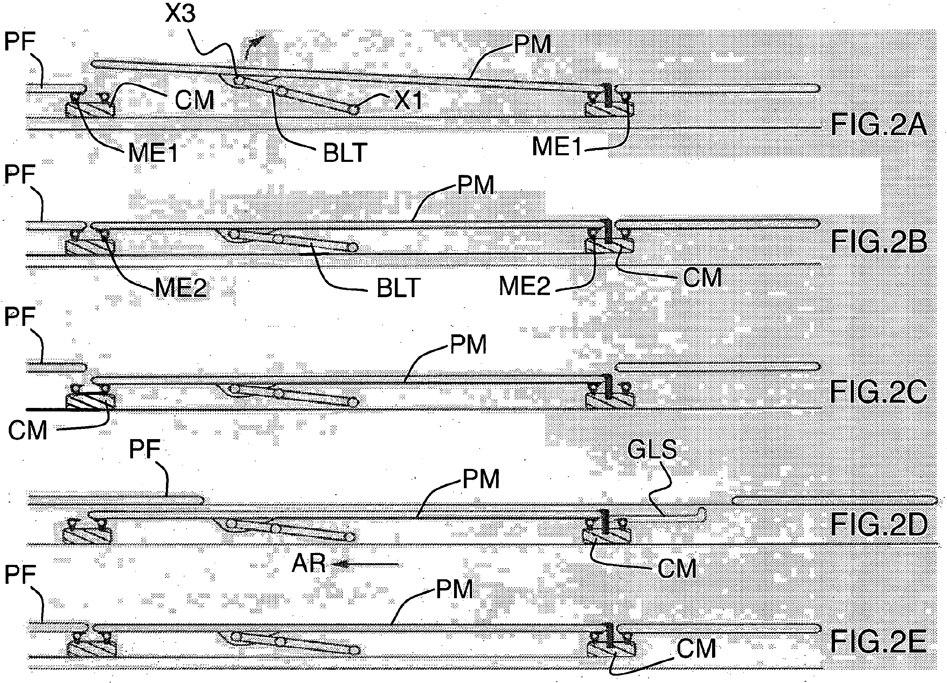

Les figures 2A à 2E sont des représentations en section d'un dispositif d'obturation selon l'invention dans différentes configurations possibles

La **FIG.2A** représente un dispositif d'obturation dans lequel le panneau mobile PM est en position entrebâillée vis-à-vis du cadre mobile CM, lui-même étant en position d'obturation de l'ouverture pratiquée dans le panneau fixe PF.

L'entrebâillement du panneau mobile PM est obtenu en imprimant à une biellette BLT incluse dans des moyens de basculement un mouvement de rotation autour d'un axe X1, ladite biellette BLT étant en outre montée pivotante autour d'un axe X3 par rapport au panneau mobile PM.

Dans ce mode de réalisation de l'invention, le cadre mobile CM est muni de premiers moyens d'étanchéité ME1 destinés à être placés en contact avec une périphérie de l'ouverture définie dans ladite partie fixe PF.

Ces moyens d'étanchéité ME1 permettent de protéger la partie fixe PF, et en particulier des mécanismes de mise en mouvement du cadre mobile CM, contre d'éventuelles projections d'eau qui viendraient à se produire lorsque le panneau mobile PM est entrebâillé.

La **FIG**.**2B** représente le dispositif d'obturation lorsque le panneau mobile PM est en position fermée vis-à-vis du cadre mobile CM, lui-même étant en position d'obturation de l'ouverture pratiquée dans le panneau fixe PF.

Dans cette position, le panneau mobile PM est plaqué contre des deuxièmes moyens d'étanchéité ME2 disposés sur un contour intérieur du cadre mobile CM, et l'ouverture pratiquée dans la partie fixe PF est alors entièrement fermée.

La **FIG.2C** représente le dispositif d'obturation lorsque, le panneau mobile PM étant en position fermée vis-à-vis du cadre mobile CM, le cadre mobile entame un mouvement par rapport au panneau fixe PF en vue de libérer l'ouverture pratiquée dans le panneau fixe PF.

A cet effet, le cadre mobile est ainsi dans un premier temps entraîné en mouvement vers le base, afin qu'il puisse ensuite être escamoté sous la partie fixe PF.

La **FIG.2D** représente le dispositif d'obturation lorsque, le cadre mobile CM n'étant plus coplanaire avec le panneau fixe PF, ledit cadre mobile entame un mouvement de translation vers l'arrière AR du véhicule par coulissement dans des glissières GLS aménagées dans des rails situés de part et d'autre du cadre mobile en vue de libérer l'ouverture pratiquée dans le panneau fixe PF.

La **FIG.2E** représente le dispositif d'obturation après que le cadre mobile CM soit revenu en position d'obturation de l'ouverture pratiquée dans le panneau fixe PF, le panneau mobile PM étant toujours en position fermée vis-à-vis du cadre mobile CM.

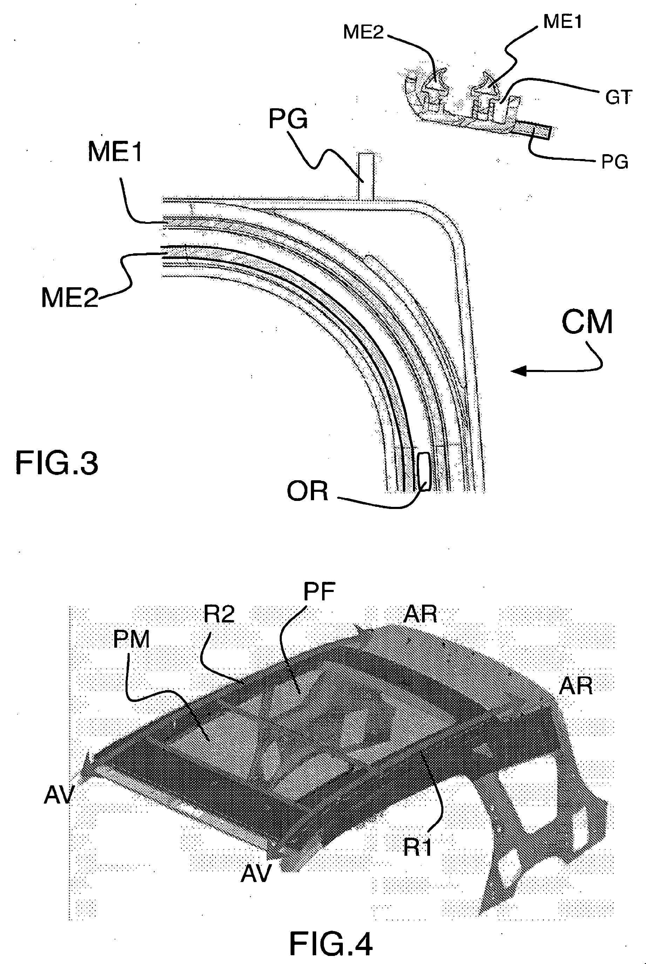

La **FIG.3** représente en vue de dessus une partie du cadre mobile CM, qui est muni de premiers moyens d'étanchéité ME1 destinés à être placés en contact avec une périphérie de l'ouverture définie dans la partie fixe, et de deuxièmes moyens d'étanchéité ME2 destinés à être placés en contact avec une périphérie de la surface inférieure du panneau mobile.

Ces moyens d'étanchéité ME1 et ME2 peuvent par exemple être des cordons ou des joints d'étanchéité, ou tout autre élément déformable adapté, rendant l'ouverture étanche en position d'obturation quelles que soient les conditions climatiques et/ou d'utilisation (pluie fine, pluie abondante, lavage au moyen d'un jet sous pression, ...).

Dans certains modes de réalisation alternatifs, ces moyens d'étanchéité ME1 et ME2 pourront également être constitués par un clapet ou tout autre élément articulé approprié, dont l'état peut être contrôlé, par exemple, par des moyens de déverrouillage du panneau mobile.

Dans le mode de réalisation particulier représenté ici, le cadre mobile CM est muni de moyens de récupération et d'évacuation d'eau, lesdits moyens de récupération et d'évacuation d'eau comprenant au moins un passage d'eau relié à un orifice d'écoulement OR d'eau recueillie dans l'espace séparant les premiers et deuxièmes moyens d'étanchéité ME1 et ME2.

En outre, le cadre mobile CM étant muni de pions de guidage PG aptes à guider le cadre mobile CM en coulissement le long de deux rails solidarisés à la surface de ladite partie fixe, les moyens de récupération et d'évacuation d'eau comprennent un passage formé de part en part dans un des pions de guidage relié à au moins un orifice d'écoulement OR.

Dans ce mode de réalisation particulier, lesdits moyens de récupération et d'évacuation d'eau comprennent en outre au moins un élément de goulotte dont une partie GT présente une forme de gouttière et empiète au moins partiellement sur l'habitacle dudit véhicule en vis-à-vis de ladite partie fixe, l'élément de goulotte étant raccordé à au moins un passage d'eau aménagé au travers dudit panneau mobile.

Ainsi, de l'eau qui ruissellerait de la partie fixe au travers de l'ouverture et tomberait dans l'élément de goulotte, pourra être aisément évacuée. L'élément de goulotte assure donc une fonction supplémentaire de « barrière » d'étanchéité, protégeant l'habitacle. En outre, en position d'obturation, si l'étanchéité obtenue n'est pas parfaite en raison par exemple, de migrations d'eau par capillarité, les gouttes d'eau suintantes peuvent être recueillies dans l'élément de goulotte afin d'être évacuées.

La **FIG.4** illustre l'écoulement de l'eau recueillie dans les moyens de récupération et d'évacuation précédemment décrits. Le panneau mobile PM étant ici légèrement galbé, de l'eau qui se trouverait à sa surface ruissellera naturellement vers ses bords et y sera recueillie soit entre les premier et deuxième moyens d'étanchéité, soit dans l'élément de goulotte aménagé sur le contour extérieur du cadre mobile. Ainsi que décrit précédemment, cette eau sera évacuée au travers par exemple des pions de guidage vers les rails dans lesquels le cadre mobile est destiné à coulisser, ces rails étant reliés à des ouvertures pratiqués à l'avant AV et à l'arrière AR du véhicule.

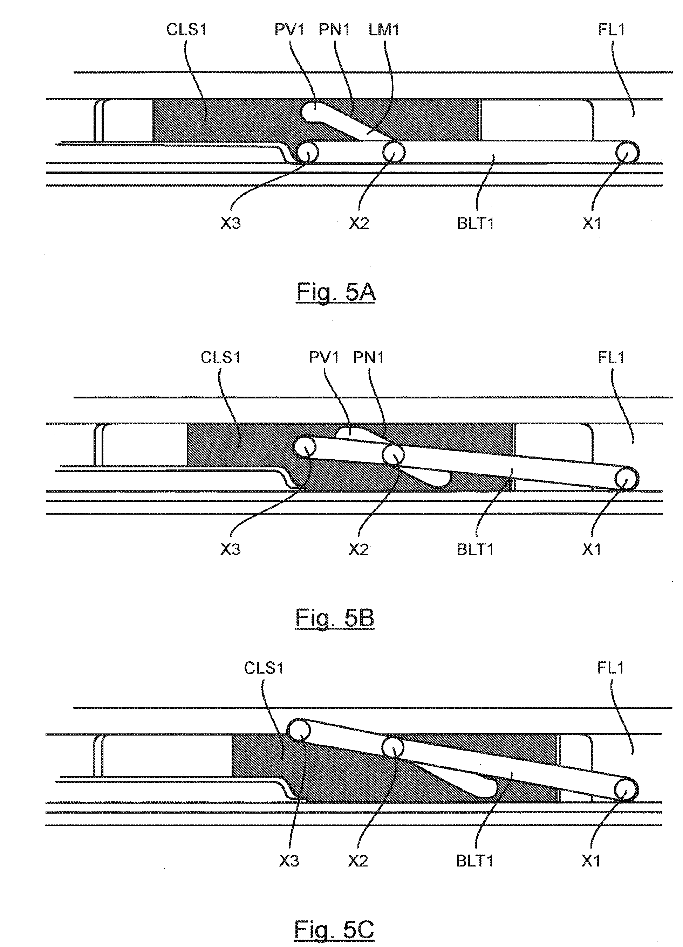

Les **FIG.5A à 5C** représentent plus en détail des moyens de basculement permettant l'entrebâillement du panneau mobile vis-à-vis du panneau fixe, selon un mode de réalisation. Ces moyens de basculement incluent un coulisseau CLS1 se déplaçant selon une seule direction (flèche F1) le long du rail R1. Une biellette BLT1 permet de contrôler l'entrebâillement du panneau mobile. Une extrémité de cette biellette est reliée à un flanc latéral interne FL1 du cadre mobile CM *via* une liaison pivot d'axe X1, et une autre extrémité est destinée à être liée au panneau mobile au moyen d'un axe X3 apte à coulisser dans un montant latéral dudit panneau mobile. La biellette BLT1 est en outre reliée en un point intermédiaire au coulisseau CLS1 au moyen d'un axe intermédiaire X2 solidaire de la biellette BLT1 et apte à se déplacer dans une lumière LM1 aménagée dans le coulisseau CLS1, laquelle lumière LM1 présente une pente PN1 menant à une position de verrouillage PV1 dans laquelle l'axe intermédiaire X2 sera immobilisé en hauteur.

Les moyens de basculement incluent en outre des moyens de maintien en position de la biellette BLT1 destinés à n'être désactivés que lorsque le cadre mobile CM est en position d'obturation.

Ainsi, tant que le cadre mobile CM n'est pas en position d'obturation **(****FIG.5A****),** la biellette BLT1 reste en position horizontale et se déplace le long du rail en même temps que le coulisseau CLS1. Par contre, lorsque le cadre mobile CM se trouve en position d'obturation, le cadre mobile CM, et donc son flanc latéral FL1 et l'axe X1 qu'il porte sont immobilisés. La poursuite du déplacement du coulisseau le long du flanc FL1, vers l'avant du véhicule, c'est-à-dire de la gauche vers la droite sur la présente figure, provoquera une montée de l'axe intermédiaire X2 de la biellette BLT1 le long de la pente PN1 de la lumière LM1 **(****FIG.5B****),** jusqu'à ce que ledit axe intermédiaire X2 arrive en butée dans la position de verrouillage PV1, qui correspond à une portion d'extrémité sensiblement horizontale de la lumière LM1 **(****FIG.5C****).**

Ce déplacement de l'axe intermédiaire X2 dans la lumière LM1 entraîne également le déplacement de l'axe X3, et donc l'entrebâillement du cadre mobile CM, jusqu'à prendre la position entrebâillée stable définie par la position PV1.

Seule une poussée imprimée au coulisseau vers l'arrière du véhicule, c'est-à-dire de la droite vers la gauche sur la présente figure, pourra alors provoquer une descente de l'axe intermédiaire X2 de la biellette BLT1 le long de la pente PN1 de la lumière LM1, qui pourra se poursuivre jusqu'à ce que la biellette BLT1 ait retrouvé une position horizontale. Le cadre mobile CM revient alors dans la position d'obturation.

La **FIG**.**6** illustre en perspective un mode de réalisation possible de moyens de mise en mouvement du coulisseau CLS1, qui incluent au moins un bras BR1 monté glissant dans une rainure RN1 aménagée dans le rail R1 qui est lui-même solidaire de la partie fixe. Ce bras BR1 est relié à un patin PT1 qui présente deux ergots X4 et X5 qui encadrent le coulisseau CLS1 et assurent ainsi l'entraînement en translation de ce coulisseau CLS1. Une butée électronique sera avantageusement aménagée pour définir une position du bras BR1 dans laquelle le cadre mobile CM se trouve en position d'obturation sans pour autant que les bras R1 se trouve lui-même en position d'extension maximale vers l'avant. La présent figure illustre un mode de réalisation possible des moyens de verrouillage des moyens de maintien en position de la biellette BLT1, qui sont ici matérialisés par une extension horizontale PP1 de la lumière LM1 dans laquelle sera maintenu l'axe intermédiaire X2 tant que le cadre mobile CM ne sera pas en position d'obturation et jusqu'à ce qu'une extension supplémentaire du bras BR1 provoque une montée de l'axe intermédiaire le long de la pente de la lumière LM1.

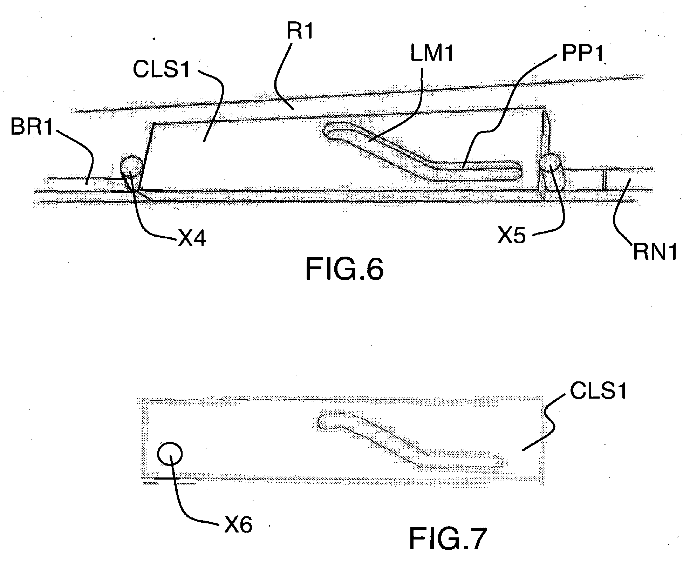

La **FIG.7** illustre un autre mode de réalisation possible de moyens de mise en mouvement du coulisseau CLS1, qui incluent un unique axe X6 traversant ledit coulisseau CLS1 et solidaire du patin décrit dans la figure précédente.

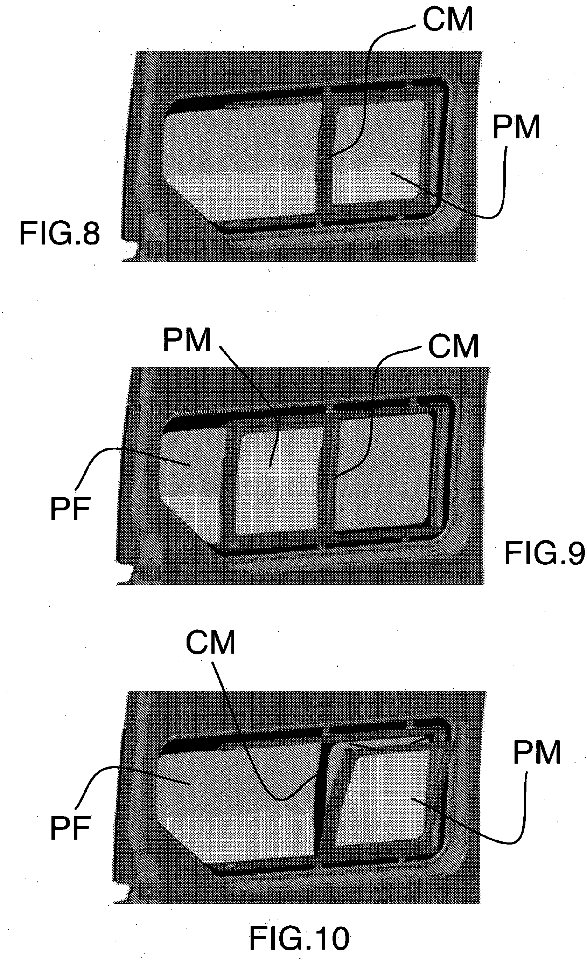

La **FIG.8** est une vue en perspective qui illustre un autre type de dispositif d'obturation conforme à l'invention, mis en oeuvre au sein d'une baie vitrée latérale. Ce dispositif comprend une partie fixe PF essentiellement verticale, un cadre CM également essentiellement vertical et en mobile dans une direction essentiellement horizontale par rapport à la partie fixe PF. Ce dispositif comprend en outre un panneau mobile PM solidaire du cadre mobile CM mais apte à basculer par rapport à celui-ci. Dans la présente figure, le panneau mobile PM est maintenu plaqué contre le cadre mobile CM.

La **FIG.9** représente un tel dispositif d'obturation en position totalement ouverte, dans laquelle le panneau mobile PM est maintenu plaqué contre le cadre mobile CM, lequel est escamoté derrière la partie fixe PF de la baie, c'est-à-dire à l'intérieur du véhicule.

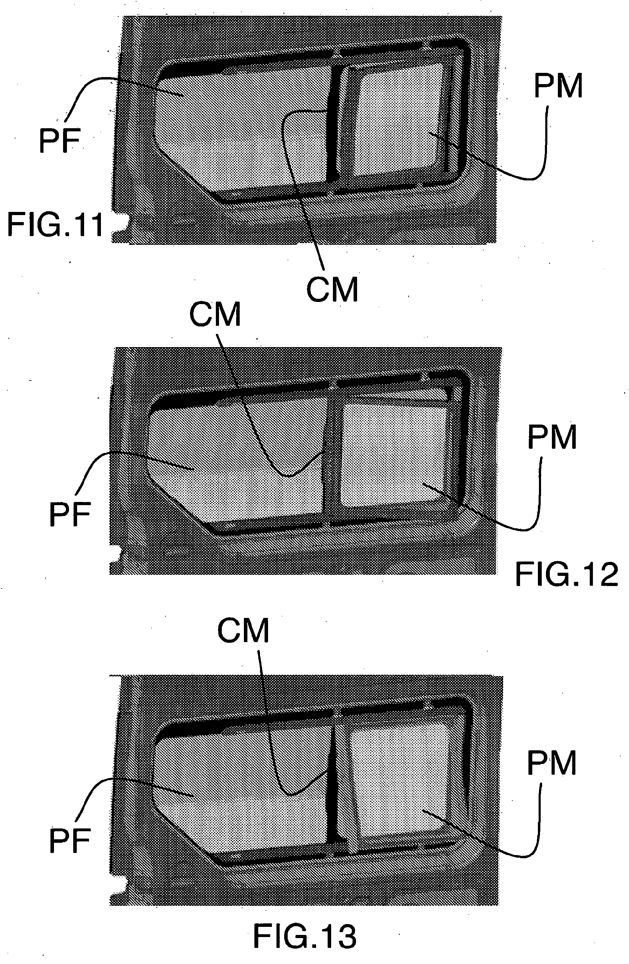

Les **FIGs.10 à 13** représente un tel dispositif d'obturation dont le cadre mobile CM est en position d'obturation, le panneau mobile y étant représenté en diverses positions de basculement possibles. Si, dans ces exemples, l'agencement du panneau mobile PM par rapport au cadre fixe CM est tel que le basculement du panneau mobile PM se produit vers l'intérieur du véhicule, un autre agencement pourra être retenu de façon à ce que le basculement du panneau mobile PM se produise vers l'extérieur du véhicule.

## Revendications

1. Dispositif d'obturation d'une baie ménagée dans la carrosserie d'un véhicule automobile, comprenant :
une partie fixe (PF) vitrée destinée à être solidarisée audit véhicule, et
un panneau vitré mobile (PM) apte à se déplacer par rapport à la partie fixe (PF) entre une position d'obturation, dans laquelle il obture une ouverture (OUV) pratiquée dans ladite partie fixe (PF), et au moins une position d'ouverture, dans laquelle ladite ouverture est au moins partiellement libérée, dispositif **caractérisé en ce que** le panneau mobile (PM) est monté sur un cadre mobile (CM) qui est muni de moyens de basculement pour faire basculer le panneau mobile par rapport audit cadre mobile, lesdits moyens de basculement incluant au moins une biellette (BLT1, BLT2) reliant le panneau mobile au cadre mobile et apte à coopérer avec un coulisseau (CLS1) monté glissant par rapport au cadre mobile.

2. Dispositif d'obturation selon la revendication 1, **caractérisé en ce que** ledit coulisseau (CLS1) est apte à être entraîné en translation par des moyens de mise en mouvement du cadre mobile par rapport à la partie fixe.

3. Dispositif d'obturation la revendication 2, **caractérisé en ce que** les moyens de mise en mouvement du cadre mobile incluent au moins un bras (BR1) monté glissant par rapport à la partie fixe et relié au coulisseau inclus dans les moyens de basculement, les moyens de basculement incluant en outre des moyens de maintien en position de la biellette destinés à n'être désactivés que lorsque le cadre mobile est en position d'obturation.

4. Dispositif d'obturation selon l'une des revendications 1 à 3, **caractérisé en ce que** le cadre mobile (CM) est muni de moyens d'étanchéité (ME1) destinés à être placés en contact avec une périphérie de l'ouverture pratiquée dans ladite partie fixe.

5. Dispositif d'obturation selon la revendication 4, **caractérisé en ce que** le cadre mobile (CM) est muni de moyens de récupération et d'évacuation d'eau, lesdits moyens de récupération et d'évacuation d'eau comprenant au moins un passage d'eau solidaire du cadre mobile, pour permettre le passage de ladite eau depuis le cadre mobile vers l'extérieur du véhicule.

6. Dispositif d'obturation selon la revendication 5, **caractérisé en ce que**, le cadre mobile étant muni de pions de guidage (PG) en coulissement le long de deux rails solidarisés à la surface de ladite partie fixe, les moyens de récupération et d'évacuation d'eau comprennent au moins un passage formé de part en part dans un des pions de guidage.

7. Véhicule automobile comprenant au moins une baie ménagée dans la carrosserie de son toit, **caractérisé en ce qu'**il comprend au moins un dispositif d'obturation selon l'une quelconque des revendications 1 à 6, fixé de façon affleurante à ladite carrosserie pour obturer ladite baie.

## Patentansprüche

1. Verschlussvorrichtung eines Ausschnitts in der Karosserie eines Kraftfahrzeugs, umfassend:
. einen verglasten feststehenden Teil (PF), der dazu bestimmt ist, fest mit dem Fahrzeug verbunden zu werden, und
. eine bewegliche Glastafel (PM), die in der Lage ist, sich bezogen auf den feststehenden Teil (PF) zwischen einer Verschlussposition, in der sie eine Öffnung (OUV), die im feststehenden Teil (PF) ausgebildet ist, verschließt, und mindestens einer Öffnungsposition, in der die Öffnung zumindest teilweise freigegeben ist, zu bewegen, Vorrichtung **dadurch gekennzeichnet, dass** die bewegliche Tafel (PM) an einem beweglichen Rahmen (CM) angebracht ist, der mit Kippmitteln versehen ist, um die bewegliche Tafel bezogen auf den beweglichen Rahmen zu kippen, wobei die Kippmittel mindestens eine Stange (BLT1, BLT2) umfassen, die die bewegliche Tafel mit dem beweglichen Rahmen verbindet und in der Lage ist, mit einem Gleitstück (CLS1), das bezogen auf den beweglichen Rahmen verschiebbar angebracht ist, zusammenzuwirken.

2. Verschlussvorrichtung nach Anspruch 1, **dadurch gekennzeichnet, dass** das Gleitstück (CLS1) in der Lage ist, durch Mittel zum Inbewegungsetzen des beweglichen Rahmens bezogen auf den feststehenden Teil in Translation angetrieben zu werden.

3. Verschlussvorrichtung nach Anspruch 2, **dadurch gekennzeichnet, dass** die Mittel zum Inbewegungsetzen des beweglichen Rahmens mindestens einen Arm (BR1) umfassen, der bezogen auf den feststehenden Teil verschiebbar angebracht ist und mit dem in den Kippmitteln enthaltenen Gleitstück verbunden ist, wobei die Kippmittel darüber hinaus Mittel zum Aufrechterhalten der Position der Stange enthalten, die dazu bestimmt sind, nur deaktiviert zu werden, wenn der bewegliche Rahmen in Verschlussposition ist.

4. Verschlussvorrichtung nach einem der Ansprüche 1 bis 3, **dadurch gekennzeichnet, dass** der bewegliche Rahmen (CM) mit Dichtungsmitteln (ME1) versehen ist, die dazu bestimmt sind, in Kontakt mit einem Rand der in dem feststehenden Teil ausgebildeten Öffnung platziert zu werden.

5. Verschlussvorrichtung nach Anspruch 4, **dadurch gekennzeichnet, dass** der bewegliche Rahmen (CM) mit Mitteln zum Auffangen und Ableiten von Wasser versehen ist, wobei die Mittel zum Auffangen und Ableiten von Wasser mindestens einen mit dem beweglichen Rahmen fest verbundenen Wasserdurchlass umfassen, um den Übergang des Wassers vom beweglichen Rahmen hin zum Äußeren des Fahrzeugs zu gestatten.

6. Verschlussvorrichtung nach Anspruch 5, **dadurch gekennzeichnet, dass**, wobei der bewegliche Rahmen mit Führungsstiften (PG) versehen ist, die entlang von zwei Schienen verschiebbar sind, die fest mit der Oberfläche des feststehenden Teils verbunden sind, die Mittel zum Auffangen und Ableiten von Wasser mindestens einen Durchlass umfassen, der in einem der Führungsstifte von einer Seite zur anderen gebildet ist.

7. Kraftfahrzeug umfassend mindestens einen Ausschnitt in der Karosserie seines Daches, **dadurch gekennzeichnet, dass** es mindestens eine Verschlussvorrichtung nach einem der Ansprüche 1 bis 6 umfasst, die bündig an der Karosserie befestigt ist, um den Ausschnitt zu verschließen.

## Claims

1. Device for closing off an opening provided in the bodywork of a motor vehicle, comprising:
- a glazed fixed portion (PF) intended to be secured to the said vehicle and
- a glazed movable panel (PM) suitable for moving relative to the fixed portion (PF) between a closed off position, in which it closes off an opening (OUV) formed in the said fixed portion (PF) and at least one open position, in which the said opening is at least partially exposed,
device **characterised in that** the movable panel (PM) is fitted to a movable frame (CM) which is provided with tilting means for tilting the movable panel relative to the said movable frame, the said tilting means including at least one rod (BLT1, BLT2) connecting the movable panel to the movable frame and being suitable for working with a slider (CLS1) fitted so as to slide relative to the movable frame.

2. Device for closing off according to claim 1, **characterised in that** the said slider (CLS1) is suitable for being driven in translational motion by means for moving the movable frame relative to the fixed portion.

3. Device for closing off according to claim 2, **characterised in that** the means for moving the movable frame include at least one arm (BR1) fitted so as to slide relative to the fixed portion and connected to the slider included in the tilting means, the tilting means also including means for holding the rod in position, the latter means being intended to be deactivated only when the movable frame is in the closed off position.

4. Device for closing off according to any one of claims 1 to 3, **characterised in that** the movable frame (CM) is provided with sealing means (ME1) intended to be placed in contact with a periphery of the opening formed in the said fixed portion.

5. Device for closing off according to claim 4, **characterised in that** the movable frame (CM) is provided with means of water collection and disposal, the said means of water collection and disposal comprising at least one water passage secured to the movable frame to allow the said water to pass from the movable frame to the outside of the vehicle.

6. Device for closing off according to claim 5, **characterised in that**, the movable frame being provided with guide pins (PG) fitted so as to slide along two rails secured to the surface of the said fixed portion, the means of water collection and disposal comprise at least one passage formed right through one of the guide pins.

7. Motor vehicle comprising at least one opening provided in the bodywork of its roof, **characterised in that** it comprises at least one device for closing off according to any one of claims 1 to 6, flush mounted on the said bodywork to close off the said opening.
